# EUROPEAN PATENT APPLICATION

(11) **EP 4 847 805 A1**
(43) Date of publication of application: **02.12.2026**
(21) Application number: 24920190.6
(22) Date of filing: 18.12.2024
(51) Int. Cl.: F16H 61/32, F16H 21/22, F16H 63/34

(54) **SHIFT APPARATUS**

(30) Priority: 22.01.2024 JP 2024007658
(71) Applicant: AISIN CORPORATION, Kariya-shi, Aichi 448-8650 (JP)
(72) Inventor: AKIYAMA, Yukihiro, Kariya-shi, Aichi 448-8650 (JP); KUWAHARA, Shinya, Kariya-shi, Aichi 448-8650 (JP); SASAKI, Masashi, Toyota-shi, Aichi 471-8571 (JP); KANEKO, Kazunori, Toyota-shi, Aichi 471-8571 (JP)
(74) Representative: TBK
(86) International application number: PCT/JP2024/044830
(87) International publication number: WO 2025/158834

(57) **Abstract**

A shift device includes: a motor including an input shaft that is rotated around an input axis; a rotated body; a revolving portion; and a driven lever including an output shaft, which outputs a driving force of the motor to a shift switching mechanism, and a guide portion that guides the revolving portion, the driven lever being configured to pivot around an output axis by being pressed by the revolving portion while being guided by the guide portion, and the input shaft is disposed between the rotated body and the output shaft when viewed from a direction along the input axis.

## Description

### Technical Field

This disclosure relates to a shift device.

### Background Art

In the related art, a shift device that switches a shift by a driving force of a motor is known. Such a shift device is disclosed in, for example, JP6221373B.

JP6221373B discloses the shift device including an actuator that drives a shift switching mechanism for switching between a parking state and a parking release state using a driving force of a motor. The actuator includes a worm (input shaft) provided integrally with a motor shaft, a worm wheel (rotated body) rotated by the worm, and a driven lever. The worm wheel is integrally provided with a sliding body (revolving portion). The sliding body revolves around a central axis of the worm wheel as the worm wheel rotates. The sliding body is configured to press the driven lever at the time of revolving to pivot an output shaft fixed to the driven lever together with the driven lever. A shift switching member is driven by torque with which the output shaft pivots to switch between the parking state and the parking release state. The worm (input shaft) provided integrally with the motor shaft is disposed at a position different from a side where the driven lever is disposed with respect to the worm wheel when viewed from a central axis direction of the worm wheel.

### Citation List

### Patent Literature

PTL 1: JP6221373B

### Summary of Invention

### Technical Problem

However, in the shift device of JP6221373B, when viewed from the central axis direction of the worm wheel (rotated body), the driven lever where the output shaft is fixed is disposed on one side around the worm wheel (rotated body) and the worm (input shaft) is disposed at a position different from the side where the driven lever is disposed around the worm wheel (rotated body), and thus there is a problem in that a size of the device increases in a direction orthogonal to the central axis of the worm wheel (rotated body).

This disclosure has been made to solve the problem described above, and an object thereof is to provide a shift device that can prevent an increase in a size of the device in a direction orthogonal to a central axis of a rotated body rotated by a motor.

### Solution to Problem

In order to achieve the above object, a shift device according to one aspect of this disclosure includes: a motor including an input shaft that is rotated around an input axis; a rotated body including a central shaft that has a central axis parallel to the input axis and configured to be rotated around the central axis by the input shaft; a revolving portion provided at the rotated body and configured to revolve around the central axis along with rotation of the rotated body; and a driven lever including an output shaft, which has an output axis parallel to the input axis and outputs a driving force of the motor to a shift switching mechanism that switches between a parking state and a parking release state, and a guide portion that guides the revolving portion, the driven lever being configured to pivot around the output axis by being pressed by the revolving portion while being guided by the guide portion, in which the input shaft is disposed between the rotated body and the output shaft when viewed from a direction along the input axis. Here, the term "parallel" in the "central axis parallel to the input axis" and the "output axis parallel to the input axis" is a broad concept including not only a case where two axes are completely parallel, but also a case where two axes are slightly offset.

As described above, in the shift device according to the one aspect of this disclosure, the input shaft of the motor is disposed between the rotated body rotated by the input shaft and the output shaft that outputs the driving force of the motor to the shift switching mechanism for switching between the parking state and the parking release state when viewed from the direction along the input axis. Accordingly, unlike a case where the input shaft is disposed at a position different from a side where the driven lever provided with the output shaft is disposed around the rotated body as in the related art, the input shaft can be disposed between the rotated body and the output shaft to effectively use a space between the rotated body and the output shaft. In addition, the input axis of the input shaft of the motor, the central axis of the central shaft of the rotated body, and the output axis of the output shaft of the driven lever are parallel. Accordingly, it is possible to reduce a size in a direction orthogonal to the central axis of the device as compared to a case where a central axis of a worm wheel that is a rotated body and an input axis of a worm that is an input shaft intersect each other as in the related art. As described above, it is possible to prevent an increase in the size of the device in the direction orthogonal to the central axis of the rotated body rotated by the motor.

In the shift device according to the one aspect described above, the revolving portion is formed in a circular shape centered on a revolving axis parallel to the input axis when viewed from the direction along the input axis, and a first straight line passing through the revolving axis and the output axis intersects the input shaft while the revolving portion revolves when viewed from the direction along the input axis.

According to this configuration, the input shaft of the motor, the output shaft, and the rotated body provided with the revolving portion can be disposed in a relatively close range in which the first straight line passing through the revolving axis and the output axis intersects the input shaft when viewed from the direction along the input axis (central axis) while the revolving portion revolves. As a result, it is possible to further prevent an increase in the size of the device in the direction orthogonal to the central axis of the rotated body rotated by the motor.

In this case, preferably, in a case where the revolving portion revolves and is in a transition intermediate state in a process of transitioning from one of the parking state and the parking release state to the other, and the revolving portion passes an orthogonal position at which the first straight line and a second straight line passing through the revolving axis and the central axis are orthogonal to each other when viewed from the direction along the input axis, the shift device is configured to alternately switch from the transition intermediate state to one of the parking state and the parking release state.

According to this configuration, when a reverse input to pivot the driven lever by an external force via the output shaft, vibration of the driven lever, or the like is received from the shift switching mechanism side while the motor is stopped, torque of the reverse input to press the revolving portion by the driven lever can be applied not in a direction for switching from the parking state and the parking release state to the transition intermediate state but in a direction for maintaining the parking state and the parking release state. As a result, the parking state and the parking release state can be stably maintained with respect to the reverse input from the shift switching mechanism side or the like.

In the configuration of alternately switching from the transition intermediate state to one of the parking state and the parking release state when the revolving portion passes the orthogonal position, preferably, the guide portion of the driven lever is a cam groove that guides movement of the revolving portion while being in contact with the revolving portion, the revolving portion is configured to reciprocate from one end to reach the other end side of the cam groove and return to the one end again while switching from one of the parking state and the parking release state to the other, and the cam groove has a pressing surface that presses the revolving portion toward the one end when the revolving portion located at the one end receives torque from the driven lever..

According to this configuration, when there is a reverse input that pivots the driven lever from the output shaft side while the motor is stopped, the revolving portion can be pressed against the pressing surface by torque of the reverse input to press the revolving portion toward the one end side. Therefore, due to the pressing surface, the torque of the reverse input can be applied in a direction in which the parking state and the parking release state are maintained. As a result, the parking state and the parking release state can be more stably maintained with respect to the reverse input from the shift switching mechanism side or the like.

In the shift device according to the one aspect described above, preferably, the guide portion of the driven lever is a cam groove that guides the movement of the revolving portion while being in contact with the revolving portion, and the cam groove includes a stop end portion that is formed as one end of the cam groove on a side of the output shaft and stops the driven lever by abutting against the revolving portion in a state of switching to each of the parking state and the parking release state.

Here, in the related art, there is known a configuration in which a configuration protruding from a surface of a rotated body toward a driven lever is provided, and such a protruding portion is abutted against an outer edge of the driven lever to stop the driven lever. In such a configuration in the related art, it is required to form a rotating body relatively large with respect to the driven lever in order to avoid abutment of the protruding portion against the outer edge of the driven lever during switching between a parking state and a parking release state, and thus the size of the device increases. Therefore, according to the configuration described above, the rotated body can be stopped by abutting the revolving portion disposed in the cam groove of the driven lever against the stop end portion of the cam groove. That is, the rotated body can be stopped only by a cam mechanism constituted by the revolving portion and the cam groove including the stop end portion. Therefore, it is not required to provide the portion protruding toward the driven lever from the surface of the rotated body in order to stop the rotated body as in the related art. Therefore, it is not required to consider avoidance of the abutment of the protruding portion against the driven lever during the rotation of the rotated body as in the related art. As a result, an increase in a size of the rotated body can be prevented, and thus an increase in the size of the device can be prevented.

In the shift device according to the one aspect described above, preferably, the input shaft includes a motor gear portion that comes into contact with the rotated body to transmit the driving force, and a non-motor gear portion disposed between the motor gear portion and a motor body that rotatably supports the input shaft in the direction along the input axis, and the driven lever includes a through hole through which the input shaft is inserted and inside which the non-motor gear portion is disposed, and is disposed between the motor body and the rotated body in a state in which the input shaft is inserted through the through hole.

According to this configuration, in an axial direction of the input shaft, the driven lever is disposed in a range of the non-motor gear portion, which is a portion that cannot be used as a gear configuration, and thus the range of the non-motor gear portion can be effectively used. As a result, an increase in the size of the device in the axial direction of the input shaft can be prevented.

The shift device according to the one aspect described above preferably further includes a housing accommodating the motor, the rotated body, the revolving portion, and the driven lever inside, in which a tip end of the input shaft located on a side opposite from the motor body that rotatably supports the input shaft is rotatably supported by the housing.

According to this configuration, the tip end of the input shaft can also be rotatably supported by the housing as compared to a case where the input shaft is rotatably supported only by the motor body (rotor), and thus the input shaft can be stably rotated.

In the shift device according to the one aspect described above, preferably, in the direction along the input axis, a range where the output shaft is provided and a range where the rotated body is provided overlap each other.

According to this configuration, the size of the device in the direction along the input axis can be reduced as compared to when the range where the output shaft is provided and the range where the rotated body is provided do not overlap each other in the direction along the input axis.

In the shift device according to the one aspect described above, the following configuration may also be considered.

### (Appendix 1)

In the configuration described above in which the guide portion is the cam groove, preferably, the revolving portion is configured to reciprocate from one end to reach the other end side of the cam groove and return to the one end again while switching from one of the parking state and the parking release state to the other, and the cam groove is formed linearly along the first straight line when viewed from the direction along the input axis.

According to this configuration, a shape of the cam groove that is the guide portion is simplified, and thus the configuration of the device can be simplified.

### (Appendix 2)

In the configuration of alternately switching from the transition intermediate state to one of the parking state and the parking release state when the revolving portion passes the orthogonal position, preferably, the revolving portion in the transition intermediate state revolves at a position farther from the output shaft than a position of the revolving portion in the parking state and a position of the revolving portion in the parking release state.

According to this configuration, a relatively large distance can be ensured between the revolving portion and the output shaft during revolving, and thus torque output from the output shaft can be relatively large.

### (Appendix 3)

In the shift device described above, preferably, the input shaft includes a motor gear portion that comes into contact with the rotated body to transmit the driving force, and the rotated body is a circular gear member having external teeth that mesh with the motor gear portion.

According to this configuration, torque from the motor gear portion of the input shaft can be easily transmitted toward the output shaft by the circular gear member having the external teeth.

### (Appendix 4)

In this case, preferably, the revolving portion provided at the rotated body that is a gear member is configured to revolve at a position on an inner peripheral side with respect to the external teeth of the gear member.

According to this configuration, distances of the external teeth and the revolving portion from the central axis of the rotated body can be different from each other, and thus torque from the input shaft can be decelerated in the revolving portion and the rotated body.

### (Appendix 5)

In the shift device described above, preferably, the revolving portion is configured to revolve around the central axis while rotating when being guided by the guide portion.

According to this configuration, friction between the revolving portion and the guide portion can be reduced by the rotation, and thus the revolving portion can smoothly revolve along the guide portion.

### Advantageous Effects of Invention

This disclosure can prevent an increase in a size of a device in a direction orthogonal to a central axis of a rotated body.

### Brief Description of Drawings

FIG. 1 is a side cross-sectional view of an actuator of a shift device according to a first embodiment;
FIG. 2 is an exploded perspective view of the actuator of the shift device according to the first embodiment;
FIG. 3 is a plan view showing an output shaft of the actuator and a shift switching mechanism of the shift device according to the first embodiment;
FIG. 4 is a perspective view showing an input shaft of the actuator, a rotated body, a revolving portion, and a driven lever of the shift device according to the first embodiment;
FIG. 5 is a plan view showing the input shaft of the actuator, the rotated body, the revolving portion, and the driven lever of the shift device according to the first embodiment;
FIG. 6 shows a relationship between the rotated body of the shift device according to the first embodiment and a range of a movement trajectory of an outer edge of the driven lever;

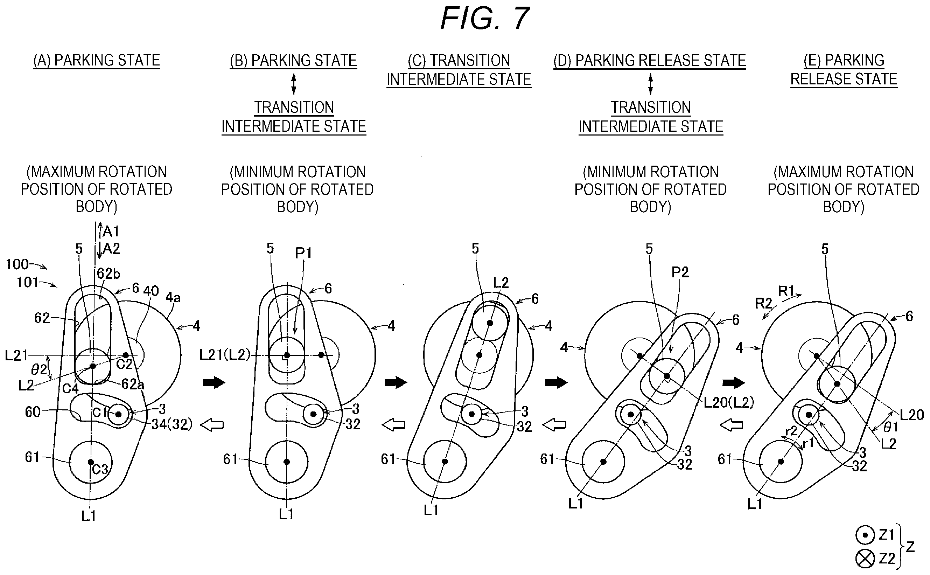

FIG. 7 shows a switching operation of the shift device according to the first embodiment between a parking state and a parking release state, in which (A) shows a position of the revolving portion in the parking state, (B) shows the position of the revolving portion in a state of switching between the parking state and a transition intermediate state, (C) shows the position of the revolving portion in the transition intermediate state, (D) shows the position of the revolving portion in a state of switching between the parking release state and the transition intermediate state, and (E) shows the position of the revolving portion in the parking release state, the parking state is maintained when the revolving portion is located in an angle (θ2) range that is a section from (A) to (B), and the parking release state is maintained when the revolving portion is located in an angle (θ1) range that is a section from (D) to (E);
FIG. 8 is a plan view showing a revolving portion of an actuator and a driven lever having a pressing surface of a shift device according to a second embodiment;
FIG. 9 is a bottom view showing an input shaft of an actuator, a rotated body, a revolving portion, and a driven lever of a shift device according to a first modification;
FIG. 10 is a plan view showing a revolving portion of an actuator and a driven lever having a pressing surface of a shift device according to a second modification;
FIG. 11 is a plan view showing a revolving portion of an actuator and a driven lever having a pressing surface of a shift device according to a third modification;
FIG. 12 is a plan view showing a revolving portion of an actuator and a driven lever having a pressing surface of a shift device according to a fourth modification;
FIG. 13 is a side cross-sectional view of an actuator of a shift device according to a fifth modification; and
FIG. 14 shows, in a plan view, a shape of a protrusion, which restricts movement of a revolving central shaft shown in FIG. 13 in an axial direction, of the shift device according to the fifth modification.

### Description of Embodiments

Hereinafter, embodiments disclosed here will be described with reference to the drawings.

### (First Embodiment)

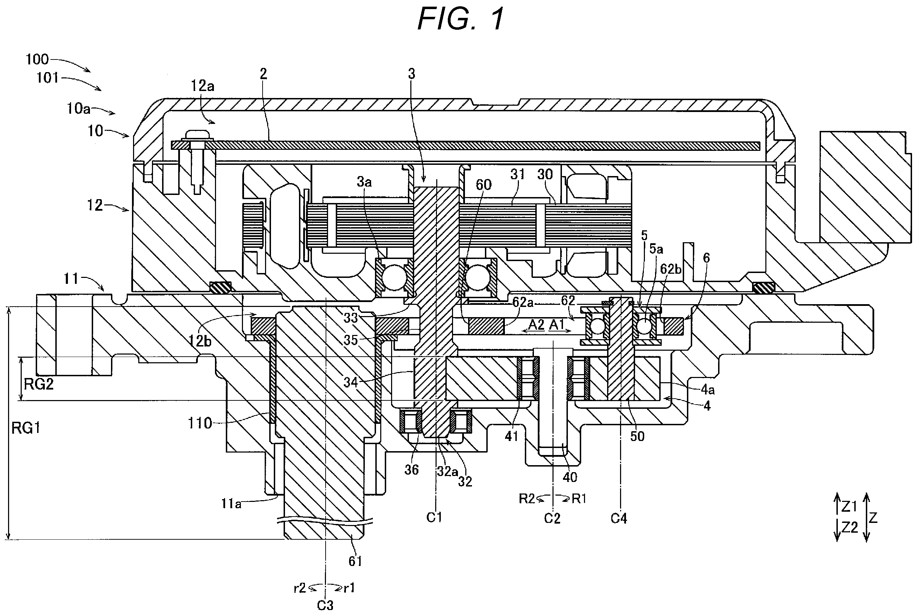

A configuration of a shift device 100 of a first embodiment will be described with reference to FIGS. 1 to 7. The shift device 100 is a device mounted on a vehicle such as an electric automobile.

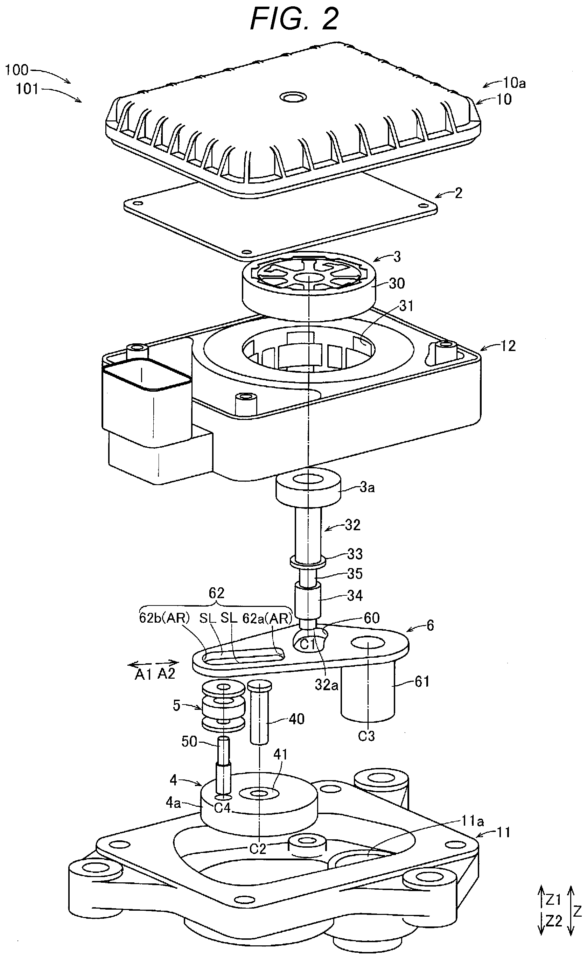

In the vehicle including the shift device 100 shown in FIGS. 1 and 2, when an occupant (driver) performs a shift switching operation via an operation unit such as a shift lever (or a shift switch), electrical shift switching control with respect to a transmission mechanism unit is performed. That is, a position of the shift lever is received by the shift device 100 via a shift sensor provided in the operation unit. Then, based on a control signal transmitted from a dedicated control board 2 provided in the shift device 100, the transmission mechanism unit is switched to any shift position of a parking (P) position, a reverse (R) position, a neutral (N) position, and a drive (D) position corresponding to a shift operation of the occupant. Such shift switching control is called shift-by-wire.

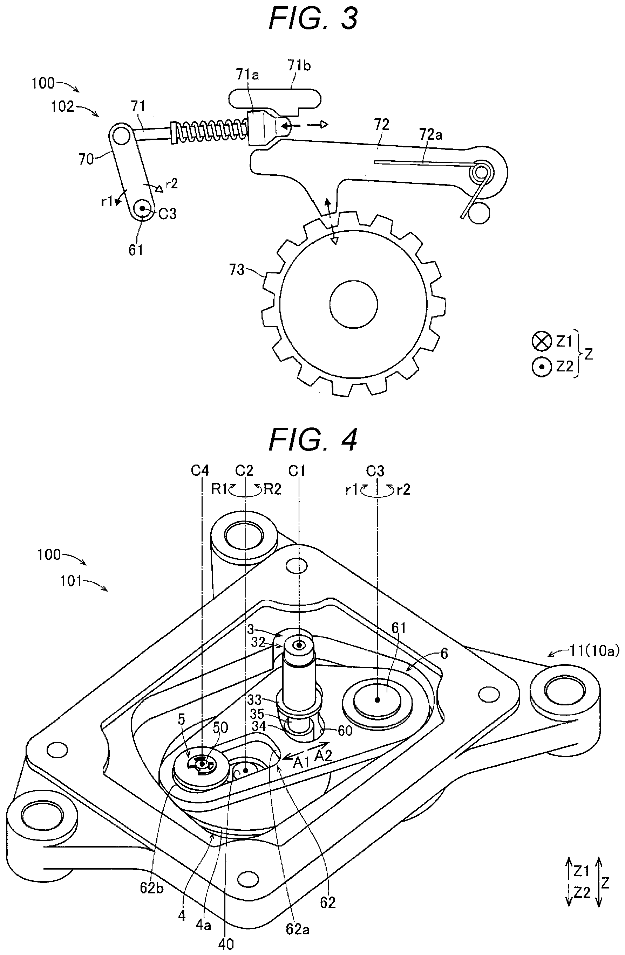

The shift device 100 includes an actuator 101 and a shift switching mechanism 102 (see FIG. 3) including a parking gear 73 and a parking rod 72. The actuator 101 is a drive device that drives the shift switching mechanism 102 based on the shift switching operation of the occupant (driver). The shift switching mechanism 102 is configured to be driven by the actuator 101 to switch between a parking state in which the parking rod 72 meshes with the parking gear 73 and a parking release state in which the meshing of the parking rod 72 with the parking gear 73 is released. The parking state is a state in which rotation of the parking gear 73 is restricted by the parking rod 72 such that the parking gear 73 does not rotate. The parking release state is a state in which the rotation restriction of the parking gear 73 by the parking rod 72 is released.

In each drawing, an axial direction of an input shaft 32 (motor shaft) to be described later of the actuator 101 is indicated by a Z direction. In the Z direction, a direction from the shift switching mechanism 102 side to the actuator 101 side is indicated by a Z1 direction, and an opposite direction is indicated by a Z2 direction.

In each drawing, a revolving direction around a central axis C2 of a revolving portion 5 is indicated by an R direction. Among R directions, one is indicated by an R1 direction, and the other is indicated by an R2 direction. When the revolving portion 5 revolves in the R1 direction, the shift switching mechanism 102 switches from the parking state to the parking release state, and when the revolving portion 5 revolves in the R2 direction, the shift switching mechanism 102 switches from the parking release state to the parking state.

In each drawing, a pivoting direction of an output shaft 61 (driven lever 6) around an output axis C3 is indicated by an r direction. Among r directions, a direction along the R1 direction is indicated by an r1 direction, and a direction along the R2 direction is indicated by an r2 direction. In a transition intermediate state in which the revolving portion 5 revolves in the R1 direction and transitions from the parking state to the parking release state, the driven lever 6 pivots in the r1 direction. In a transition intermediate state in which the revolving portion 5 revolves in the R2 direction and transitions from the parking release state to the parking state, the driven lever 6 pivots in the r2 direction.

In each drawing, a direction along a first straight line L1 is indicated by an A direction. Among A directions, a direction from a revolving axis C4 side of the revolving portion 5 toward the output axis C3 side of the output shaft 61 is indicated by an A2 direction, and an opposite direction is indicated by an A1 direction. The A direction is a direction that coincides with a longitudinal direction of a guide portion 62 (cam groove), and is also a direction that varies as the revolving portion 5 moves.

As shown in FIGS. 1 and 2, the actuator 101 includes an upper housing 10 (lid member), a lower housing 11, a support housing 12, the control board 2, a motor 3 including the input shaft 32, a rotated body 4 including a central shaft 40, the revolving portion 5, and the driven lever 6 including the output shaft 61. The upper housing 10 (lid member), the lower housing 11, and the support housing 12 constitute a housing 10a that accommodates the motor 3, the rotated body 4, the revolving portion 5, and the driven lever 6 inside.

The rotated body 4, the revolving portion 5, and the driven lever 6 are configured to decelerate a driving force of the motor 3 to generate relatively large torque. The parking rod 72 is moved by such torque. The driving force of the motor 3 is transmitted to the input shaft 32 of the motor 3, the rotated body 4, the revolving portion 5, the driven lever 6 (output shaft 61), and the shift switching mechanism 102 (parking rod 72) in this order.

The input shaft 32 of the motor 3 extends in the Z direction along an input axis C1 located at a center of the input shaft 32. The central shaft 40 of the rotated body 4 extends in the Z direction along the central axis C2 located at a center of the rotated body 4. The output shaft 61 of the driven lever 6 extends in the Z direction along the output axis C3 located at a center of the driven lever 6. The revolving portion 5 is formed in a circular shape centered on the revolving axis C4 extending in the Z direction. That is, the input axis C1 is parallel to each of the central axis C2, the output axis C3, and the revolving axis C4.

The input axis C1, the central axis C2, and the output axis C3 are axes that do not move when viewed from a direction along the input axis C1 (Z direction). Meanwhile, the revolving axis C4 is an axis that revolves (orbits) around the central axis C2 as the revolving portion 5 revolves. The input axis C1 is disposed at a position offset from a straight line connecting the central axis C2 and the output axis C3 when viewed from the direction along the input axis C1 (Z direction). With such a disposition, it is possible to reduce a size of the driven lever 6 in a direction orthogonal to the input axis C1 as compared to a case where all of the input axis, the central axis, and the output axis are linearly disposed in the same manner.

### (Configuration of Upper Housing, Lower Housing, and Support Housing)

The upper housing 10, the lower housing 11, and the support housing 12 shown in FIGS. 1 and 2 are assembled with the support housing 12 disposed between the upper housing 10 and the lower housing 11. The upper housing 10, the lower housing 11, and the support housing 12 accommodate the components described above (the support housing 12, the control board 2, the motor 3, the rotated body 4, the revolving portion 5, and the driven lever 6) of the actuator 101 inside.

The support housing 12 is open on the Z1 direction side, and an open portion is closed by the upper housing 10. The lower housing 11 is open on the Z1 direction side, and an open portion is closed by the support housing 12. The lower housing 11 is provided with a through hole 11a through which the output shaft 61 of the driven lever 6 is inserted. The through hole 11a penetrates the lower housing 11 in the Z direction. The output shaft 61 inserted into the through hole 11a protrudes from the lower housing 11 in the Z2 direction. The output shaft 61 abuts against the support housing 12 from the Z2 direction side to position the output shaft 61 in the axial direction.

The support housing 12 rotatably supports the input shaft 32 of the motor 3. Specifically, the support housing 12 is provided with a motor bearing 3a that rotatably supports the input shaft 32. The motor bearing 3a is provided at the support housing 12 from the Z2 direction side of the support housing 12. A stator 31 of the motor 3 is fixed to the support housing 12 from the Z1 direction side of the support housing 12 (see FIG. 4). A space 12a (see FIG. 1) in which the control board 2 is accommodated is provided on the Z1 direction side of the support housing 12, and a space 12b (see FIG. 1) in which the rotated body 4, the revolving portion 5, and the driven lever 6 are accommodated is provided on the Z2 direction side of the support housing 12.

### (Configuration of Control Board)

The control board 2 shown in FIG. 1 is configured to control driving of the motor 3. The control board 2 is a board component where an electronic component is mounted on a board. The control board 2 is a board whose thickness direction is the Z direction, and is fixed to the support housing 12 by a fastening member. The control board 2 covers the motor 3 from the Z1 direction side.

### (Configuration of Motor)

As an example, the motor 3 is an interior permanent magnet (IPM) type brushless three-phase motor. The motor 3 is fixed to the support housing 12 by a fastening member. The motor 3 includes a rotor 30, the stator 31, and the input shaft 32. The rotor 30 and the stator 31 constitute a motor body 30a that rotatably supports the input shaft 32.

In the rotor 30, N-pole magnets and S-pole magnets as permanent magnets are alternately embedded at equal angular intervals around the input axis C1 of the input shaft 32. The stator 31 includes excitation coils of a plurality of phases (U-phase, V-phase, and W-phase) that generate a magnetic force by energization. The input shaft 32 is configured to rotate around the input axis C1 together with the rotor 30. The input shaft 32 is rotatably supported by the motor bearing 3a provided in the support housing 12.

The input shaft 32 penetrates the driven lever 6. Specifically, the input shaft 32 is inserted into a through hole 60 to be described later of the driven lever 6. The input shaft 32 includes a flange portion 33 abutted against the motor bearing 3a from the Z2 direction side, a motor gear portion 34, and a non-motor gear portion 35. The motor gear portion 34 is configured to come into contact with the rotated body 4 to transmit the driving force to the rotated body 4. In the direction along the input axis C1 (Z direction), the non-motor gear portion 35 is disposed between the flange portion 33 (motor body 30a) and the motor gear portion 34. The non-motor gear portion 35 is directly connected to the flange portion 33 from the Z2 direction side.

The non-motor gear portion 35 is a portion that cannot be used as a gear configuration during a transition from the flange portion 33 to a gear shape of the motor gear portion 34. In short, the motor gear portion 34 cannot be directly connected to the flange portion 33. The non-motor gear portion 35 is disposed between the motor gear portion 34 and the support housing 12 in the axial direction (Z direction) of the input shaft 32. The motor gear portion 34 is disposed near an end portion of the input shaft 32 in the Z2 direction. A tip end 32a of the input shaft 32 located on a side opposite from the motor body 30a (Z2 direction side) is rotatably supported by the housing 10a. Specifically, the lower housing 11 of the housing 10a includes a bearing 36. The tip end 32a of the input shaft 32 in the Z2 direction is rotatably supported by the bearing 36.

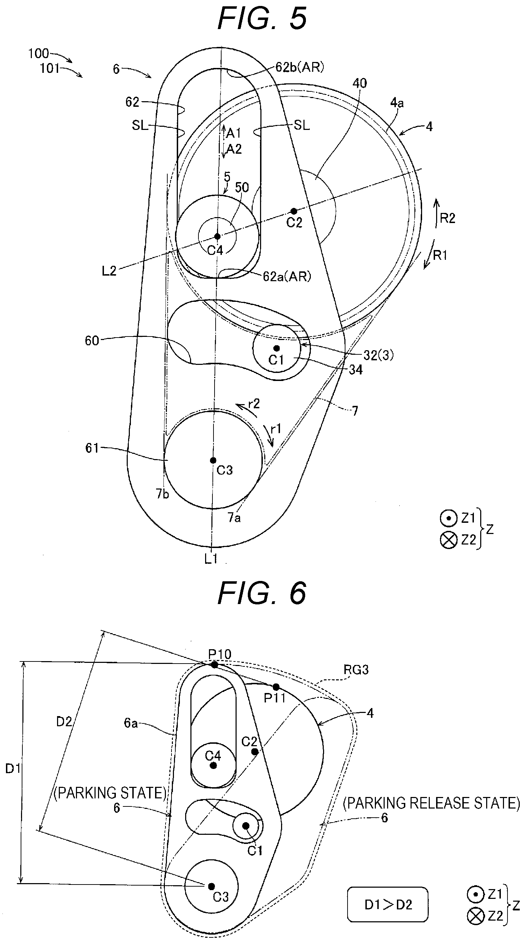

Here, as shown in FIG. 5, the input shaft 32 in the first embodiment is disposed between the rotated body 4 directly rotated by the input shaft 32 and the output shaft 61 of the driven lever 6 when viewed from the direction along the input axis C1 (Z direction). In addition, when a straight line passing through the revolving axis C4 and the output axis C3 when viewed from the direction along the input axis C1 is defined as the first straight line L1, the first straight line L1 is configured to intersect the input axis C1, which is a center line of the motor 3, while the revolving portion 5 revolves.

The expression "disposed between the rotated body 4 and the output shaft 61 of the driven lever 6" includes not only a case where the entire input shaft 32 is disposed in a space 7 between the rotated body 4 and the output shaft 61 of the driven lever 6, but also a case where only a part of the input shaft 32 is disposed in the space 7 between the rotated body 4 and the output shaft 61 of the driven lever 6.

The "space 7 between the rotated body 4 and the output shaft 61 of the driven lever 6" means a space (a range surrounded by a two-dot chain line in FIG. 5) surrounded by two tangents 7a and 7b tangent to both the circular rotated body 4 and the circular output shaft 61, the rotated body 4, and the output shaft 61 when viewed from the direction along the input axis C1 (Z direction). The two tangents 7a and 7b are so-called common external tangents.

### (Configuration of Rotated Body)

The rotated body 4 shown in FIG. 5 is a circular gear member having external teeth 4a that mesh with the motor gear portion 34 of the input shaft 32. That is, the rotated body 4 is a spur gear. A diameter of the rotated body 4 is larger than a diameter of the input shaft 32. The rotated body 4 includes the central shaft 40 having the central axis C2 parallel to the input axis C1, and is configured to be rotated around the central axis C2 by the input shaft 32. The central shaft 40 is configured in a cantilever shaft shape whose end portion in the Z2 direction is fixed to the lower housing 11. The central shaft 40 is provided with a bearing 41 that rotatably supports a gear configuration portion having the external teeth 4a of the rotated body 4.

As shown in FIG. 6, the rotated body 4 is configured to fall within a range RG3 of a movement trajectory of an outer edge 6a of the driven lever 6 when viewed from the direction along the input axis C1 (Z direction). In short, when viewed from the direction along the input axis C1 (Z direction), a distance D1 between the output axis C3 and a position P10 of the driven lever 6 farthest from the output axis C3 is larger than a distance D2 between the output axis C3 and a position P11 of the rotated body 4 farthest from the output axis C3 (D1 > D2).

### (Configuration of Revolving Portion)

The revolving portion 5 shown in FIG. 5 is provided at the rotated body 4 and is configured to revolve (orbit) around the central axis C2 as the rotated body 4 rotates. As an example, a revolving angle range of the revolving portion 5 is larger than 180 degrees and smaller than 360 degrees. The revolving portion 5 is formed in a circular shape centered on the revolving axis C4 parallel to the input axis C1 when viewed from the direction along the input axis C1. The revolving portion 5 is provided with a revolving central shaft 50 whose end portion in the Z2 direction is fixed to the rotated body 4. The revolving portion 5 is supported by the revolving central shaft 50 protruding from the rotated body 4 in the Z1 direction. The revolving central shaft 50 extends in the Z direction and is located at a center of the revolving portion 5. The revolving portion 5 and the revolving central shaft 50 are separated from the support housing 12 and the lower housing 11 so as not to contact the support housing 12 and the lower housing 11.

The revolving portion 5 provided at the rotated body 4 that is the gear member is configured to revolve at a position on an inner peripheral side with respect to the external teeth 4a of the gear member. In short, a distance from the central axis C2 to the revolving axis C4, which is a revolving radius of the revolving portion 5, is smaller than a distance from the central axis C2 to the external teeth 4a, which is a radius of the rotated body 4.

During revolving, the revolving portion 5 revolves while being guided by the guide portion 62 (cam groove) to be described later of the driven lever 6. The revolving portion 5 is configured to revolve around the central axis C2 while rotating when being guided by the guide portion 62. Specifically, the revolving portion 5 has a bearing structure including a plurality of spherical rollers 5a (see FIG. 1) for reducing friction generated between the revolving portion 5 and the guide portion 62 that comes into contact when the revolving portion 5 is guided by the guide portion 62.

A distance between the output axis C3 and a position of the revolving portion 5 in the parking state (revolving axis C4) is substantially equal to a distance between the output axis C3 and the position (revolving axis C4) of the revolving portion 5 in the parking release state. The revolving portion 5 in the transition intermediate state, which is a state of transitioning from one of the parking state and the parking release state to the other, is configured to revolve at a position farther from the output shaft 61 than the position of the revolving portion 5 in the parking state and the position of the revolving portion 5 in the parking release state.

In other words, a distance between the revolving axis C4 of the revolving portion 5 in the transition intermediate state and the output axis C3 is larger than the distance between the revolving axis C4 and the output axis C3. In short, in the transition intermediate state of switching between the parking state and the parking release state, the revolving portion 5 does not perform inner movement via a side closer to the output shaft 61 than the central shaft 40, but performs outer movement via a side farther from the output shaft 61 than the central shaft 40.

During switching from one of the parking state and the parking release state to the other, the revolving portion 5 is configured to reciprocate from a stop end portion 62a to be described later, which is one end of the cam groove serving as the guide portion 62, to reach the other end 62b side and return to the stop end portion 62a that is the one end again. Details will be described later in a description of a switching operation between the parking state and the parking release state.

### (Configuration of Driven Lever)

The driven lever 6 shown in FIG. 1 is a relatively thin plate member whose thickness direction is the Z direction. A thickness of the driven lever 6 is smaller than a thickness of the rotated body 4. In the Z direction, a center position of the driven lever 6 substantially coincides with a center position of the revolving portion 5.

The driven lever 6 includes the through hole 60, the output shaft 61, and the guide portion 62. In the direction along the input axis C1 (Z direction), a range RG1 where the output shaft 61 is provided and a range RG2 where the rotated body 4 is provided overlap each other. Specifically, in the Z direction, the entire range RG2 where the rotated body 4 is provided is within the range RG1 where the output shaft 61 is provided. The driven lever 6 and the output shaft 61 are supported by the lower housing 11 via an L-shaped bush 110.

The input shaft 32 is inserted into the through hole 60, and the non-motor gear portion 35 is disposed inside the through hole 60. The driven lever 6 is disposed between the support housing 12 (motor body 30a) and the rotated body 4 in a state in which the input shaft 32 is inserted into the through hole 60. The through hole 60 is formed in an arc shape centered on the output axis C3 when viewed from the direction along the input axis C1 (Z direction). The through hole 60 is formed slightly larger than the input shaft 32 so as not to interfere with the inserted input shaft 32 when the driven lever 6 pivots. In short, the through hole 60 is a so-called relief hole.

The output shaft 61 has the output axis C3 parallel to the input axis C1, and is configured to output the driving force of the motor 3 to the shift switching mechanism 102 (see FIG. 3) that switches between the parking state and the parking release state. The output shaft 61 is fixed to a plate portion of the driven lever 6. The guide portion 62 is configured to guide the revolving portion 5 that revolves. The driven lever 6 is guided by the guide portion 62 and pressed by the revolving portion 5 that revolves circularly, and thus pivots around the output axis C3. The output shaft 61 is formed of a single member.

As shown in FIG. 5, the guide portion 62 of the driven lever 6 is a cam groove that guides movement of the revolving portion 5 while being in contact with the revolving portion 5. The cam groove that is the guide portion 62 is formed linearly along the first straight line L1 when viewed from the direction along the input axis C1 (Z direction). Specifically, the cam groove that is the guide portion 62 has an elliptic shape formed by two straight line portions SL extending in parallel to a direction along the first straight line L1 and two arc portions AR connecting end portions of the two straight lines when viewed from the direction along the input axis C1 (Z direction). The cam groove that is the guide portion 62 includes the stop end portion 62a formed as one end of the cam groove on the output shaft 61 side. The stop end portion 62a is configured to stop the driven lever 6 by abutting against the revolving portion 5 in a state of switching to each of the parking state and the parking release state. Therefore, in the parking state and the parking release state, the revolving portion 5 is located at the stop end portion 62a to be described later, which is the one end of the linear cam groove that is the guide portion 62.

### (Configuration of Shift Switching Mechanism)

As shown in FIG. 3, the shift switching mechanism 102 includes an arm portion 70 having one end fixed to the output shaft 61, a rod-shaped torque transmission member 71 connected to the other end of the arm portion 70, the parking rod 72 moved by the torque transmission member 71, and the parking gear 73.

The arm portion 70 is configured to pivot in the r1 direction and the r2 direction together with the output shaft 61 (driven lever 6). The torque transmission member 71 is provided with a cam portion 71a at a tip end. The cam portion 71a is configured to move forward toward the parking rod 72 and backward as the arm portion 70 pivots. A guide member 71b that guides the cam portion 71a toward the parking rod 72 and presses the cam portion 71a against the parking rod 72 is provided in front of the cam portion 71a in a moving direction. The parking rod 72 is provided with a spring member 72a that constantly biases the parking rod 72 toward the guide member 71b. When the cam portion 71a enters between the guide member 71b and the parking rod 72, the parking rod 72 is moved toward the parking gear 73 against a biasing force of the spring member 72a, the parking rod 72 meshes with the parking gear 73 to change the state from the parking release state to the parking state.

### (Switching Operation Between Parking State and Parking Release State by Shift Device)

A switching operation between the parking state and the parking release state by the shift device 100 will be described with reference to FIG. 7.

### (Switching Operation from Parking State to Parking Release State)

A switching operation from the parking state shown in (A) of FIG. 7 to the parking release state shown in (E) of FIG. 7 will be described.

First, in the parking state in (A) of FIG. 7, the revolving portion 5 is located in the vicinity of the stop end portion 62a, which is the one end of the cam groove that is the guide portion 62. The vicinity of the stop end portion 62a that is the one end is a concept including not only a position of the revolving portion 5 at which the revolving portion 5 is slightly separated from the stop end portion 62a that is the one end, but also a position of the revolving portion 5 at which the revolving portion 5 comes into contact with the stop end portion 62a that is the one end. In this state, torque for causing the revolving portion 5 to revolve in the R1 direction is received from the input shaft 32 of the motor 3 via the rotated body 4. In this case, since the revolving portion 5 moves in the A1 direction along the guide portion 62 so as to be separated from the output shaft 61, the driven lever 6 hardly pivots. As a result, since the revolving portion 5 (effort point) is separated from the input shaft 32 (fulcrum), torque by which the revolving portion 5 presses and pivots the driven lever 6 increases. That is, since a relatively large distance between the revolving axis C4 and the output axis C3 can be ensured, relatively large torque for pivoting the output shaft 61 can be generated with a relatively small load of the motor 3.

The state is switched from the parking state to the transition intermediate state at an orthogonal position P1 (the position of the revolving portion 5) where the first straight line L1 shown in (B) of FIG. 7 is orthogonal to a second straight line L2 passing through the revolving axis C4 and the central axis C2. Specifically, in the parking state, the shift device 100 is configured to switch from the parking state to the transition intermediate state when the revolving portion 5 passes the orthogonal position P1 where the first straight line L1 is orthogonal to the second straight line L2 toward the R1 direction when viewed from the direction along the input axis C1 (Z direction).

As shown in (C) of FIG. 7, the revolving portion 5 revolves in the R1 direction due to the outer movement. In (C) of FIG. 7, a state is shown in which the first straight line L1 and the second straight line L2 coincide with each other in the transition intermediate state, and a state is shown in which the revolving portion 5 reaches the other end 62b side of the cam groove that is the guide portion 62.

The state is switched from the transition intermediate state to the parking release state at an orthogonal position P2 (the position of the revolving portion 5) shown in (D) of FIG. 7 where the first straight line L1 is orthogonal to the second straight line L2. Specifically, in the transition intermediate state, the shift device 100 is configured to switch from the transition intermediate state to the parking release state when the revolving portion 5 passes the orthogonal position P2 where the first straight line L1 is orthogonal to the second straight line L2 toward the R1 direction when viewed from the direction along the input axis C1 (Z direction). Here, in FIG. 7, among second straight lines L2 whose directions vary due to the revolution of the revolving portion 5, the second straight line L2 located at the orthogonal position P2 is indicated by "L20".

In the parking release state shown in (E) of FIG. 7, the revolving portion 5 is located again at the stop end portion 62a, which is the one end of the cam groove that is the guide portion 62. The revolving portion 5 located at the stop end portion 62a that is the one end shown in (E) of FIG. 7 further pivots in the R1 direction by an angle θ1 from the orthogonal position P2 shown in (D) of FIG. 7. In a case where the revolving portion 5 is located in a range of the angle θ1, even when there is a reverse input to pivot the driven lever 6 from the shift switching mechanism 102 side or the like, the shift device 100 can prevent the revolving portion 5 from passing the orthogonal position P2 toward the R2 direction and switching the state from the parking release state to the transition intermediate state.

Specifically, in the state shown in (E) of FIG. 7, when there is a reverse input to pivot the driven lever 6 in the r2 direction, the revolving portion 5 is pressed by the driven lever 6 in the R1 direction on the stop end portion 62a side that is the one end, but the revolving portion 5 is abutted against the stop end portion 62a that is the one end and does not further revolve, and does not move from the position shown in (E) of FIG. 7 to the orthogonal position P2. In addition, in the state shown in (E) of FIG. 7, when there is a reverse input to pivot the driven lever 6 in the r1 direction, the revolving portion 5 may revolve before the orthogonal position P2, but at a position before the orthogonal position P2 within the range of the angle θ1, a force from the driven lever 6 toward the other end 62b side of the cam groove that is the guide portion 62 does not act on the revolving portion 5, and thus the revolving portion 5 does not revolve beyond the orthogonal position P2 shown in (D) of FIG. 7. Therefore, unless torque is received from the input shaft 32 of the motor 3, the position of the revolving portion 5 is maintained within the range of the angle θ1 shown in (E) of FIG. 7. In short, an angle of the revolving portion 5 in the parking release state is an angle range having a predetermined width (angle θ1). That is, the parking release state is maintained unless torque is received from the input shaft 32 of the motor 3. The state is not switched due to the reverse input from the state shown in (E) of FIG. 7 to the state shown in (C) of FIG. 7 via the state shown in (D) of FIG. 7. The position of the revolving portion 5 when the revolving central shaft 50 is located on the second straight line L20 shown in (D) of FIG. 7 is the position of the revolving portion 5 at the time of switching between the parking release state and the transition intermediate state. Therefore, the position of the revolving portion 5 when the revolving central shaft 50 is located on the second straight line L20 is not included in the position of the revolving portion 5 in the parking release state.

### (Switching Operation from Parking Release State to Parking State)

Next, a switching operation from the parking release state shown in (E) of FIG. 7 to the parking state shown in (A) of FIG. 7 will be described.

First, in the parking release state in (E) of FIG. 7, the revolving portion 5 is located in the vicinity of the stop end portion 62a, which is the one end of the cam groove that is the guide portion 62. In this state, torque for causing the revolving portion 5 to revolve in the R2 direction is received from the input shaft 32 of the motor 3 via the rotated body 4. In this case, since the revolving portion 5 moves in the A1 direction along the guide portion 62 so as to be separated from the output shaft 61, the driven lever 6 hardly pivots.

The state is switched from the parking release state to the transition intermediate state at the orthogonal position P2 shown in (D) of FIG. 7 where the first straight line L1 is orthogonal to the second straight line L2 passing through the revolving axis C4 and the central axis C2. Specifically, in the parking release state, the shift device 100 is configured to switch from the parking release state to the transition intermediate state when the revolving portion 5 passes the orthogonal position P2 where the first straight line L1 is orthogonal to the second straight line L2 toward the R2 direction when viewed from the direction along the input axis C1 (Z direction).

As shown in (C) of FIG. 7, the revolving portion 5 revolves in the R2 direction due to the outer movement. In (C) of FIG. 7, a state is shown in which the first straight line L1 and the second straight line L2 coincide with each other in the transition intermediate state, and a state is shown in which the revolving portion 5 reaches the other end 62b side of the cam groove that is the guide portion 62.

The state is switched from the transition intermediate state to the parking state at the orthogonal position P1 shown in (B) of FIG. 7 where the first straight line L1 is orthogonal to the second straight line L2. Specifically, in the transition intermediate state, the shift device 100 is configured to switch from the transition intermediate state to the parking state when the revolving portion 5 passes the orthogonal position P1 where the first straight line L1 is orthogonal to the second straight line L2 toward the R2 direction when viewed from the direction along the input axis C1 (Z direction). Here, in FIG. 7, among the second straight lines L2 whose directions vary due to the revolution of the revolving portion 5, the second straight line L2 located at the orthogonal position P1 is indicated by "L21".

In the parking state shown in (A) of FIG. 7, the revolving portion 5 is located at the stop end portion 62a, which is the one end of the cam groove that is the guide portion 62. The revolving portion 5 located at the stop end portion 62a that is the one end shown in (A) of FIG. 7 further pivots in the R2 direction by an angle θ2 from the orthogonal position P1 shown in (B) of FIG. 7. In a case where the revolving portion 5 is located in a range of the angle θ2, even when there is a reverse input to pivot the driven lever 6 from the shift switching mechanism 102 side or the like, the shift device 100 can prevent the revolving portion 5 from passing the orthogonal position P1 toward the R1 direction and switching the state from the parking state to the transition intermediate state.

Specifically, in the state shown in (A) of FIG. 7, when there is a reverse input to pivot the driven lever 6 in the r1 direction, the revolving portion 5 is pressed by the driven lever 6 in the R2 direction on the stop end portion 62a side that is the one end, but the revolving portion 5 is abutted against the stop end portion 62a that is the one end and does not further revolve, and does not move from the position shown in (A) of FIG. 7 to the orthogonal position P1. In addition, in the state shown in (A) of FIG. 7, when there is a reverse input to pivot the driven lever 6 in the r2 direction, the revolving portion 5 may revolve before the orthogonal position P1, but at a position before the orthogonal position P1 within the range of the angle θ2, a force from the driven lever 6 toward the other end 62b side of the cam groove that is the guide portion 62 does not act on the revolving portion 5, and thus the revolving portion 5 does not revolve beyond the orthogonal position P1 shown in (B) of FIG. 7. Therefore, unless torque is received from the input shaft 32 of the motor 3, the position of the revolving portion 5 is maintained within the range of the angle θ2 shown in (A) of FIG. 7. In short, the angle of the revolving portion 5 in the parking state is an angle range having a predetermined width (angle θ2). That is, the parking state is maintained unless torque is received from the input shaft 32 of the motor 3. The state is not switched due to the reverse input from the state shown in (A) of FIG. 7 to the state shown in (C) of FIG. 7 via the state shown in (B) of FIG. 7. The position of the revolving portion 5 when the revolving central shaft 50 is located on the second straight line L21 shown in (B) of FIG. 7 is the position of the revolving portion 5 at the time of switching between the parking state and the transition intermediate state. Therefore, the position of the revolving portion 5 when the revolving central shaft 50 is located on the second straight line L21 is not included in the position of the revolving portion 5 in the parking state.

### (Effects of First Embodiment)

In the first embodiment, the following effects can be obtained.

According to the first embodiment, as described above, the input shaft 32 of the motor 3 is disposed between the rotated body 4 rotated by the input shaft 32 and the output shaft 61 that outputs the driving force of the motor 3 to the shift switching mechanism 102 for switching between the parking state and the parking release state when viewed from the direction along the input axis C1. Accordingly, unlike a case where the input shaft is disposed at a position different from a side where the driven lever provided with the output shaft is disposed around the rotated body as in the related art, the input shaft 32 can be disposed between the rotated body 4 and the output shaft 61 to effectively use a space between the rotated body 4 and the output shaft 61. In addition, the input axis C1 of the input shaft 32 of the motor 3, the central axis C2 of the central shaft 40 of the rotated body 4, and the output axis C3 of the output shaft 61 of the driven lever 6 are parallel. Accordingly, it is possible to reduce a size in a direction orthogonal to the central axis C2 of the device as compared to a case where a central axis of a worm wheel that is a rotated body and an input axis of a worm that is an input shaft intersect each other as in the related art. As described above, it is possible to prevent an increase in the size of the device in the direction orthogonal to the central axis C2 of the rotated body 4 rotated by the motor 3.

According to the first embodiment, as described above, the revolving portion 5 is formed in the circular shape centered on the revolving axis C4 parallel to the input axis C1 when viewed from the direction along the input axis C1, and the first straight line L1 passing through the revolving axis C4 and the output axis C3 intersects the input shaft 32 while the revolving portion 5 revolves when viewed from the direction along the input axis C1. Accordingly, the input shaft 32 of the motor 3, the output shaft 61, and the rotated body 4 provided with the revolving portion 5 can be disposed in a relatively close range in which the first straight line L1 passing through the revolving axis C4 and the output axis C3 intersects the input shaft 32 when viewed from the direction along the input axis C1 (central axis C2) while the revolving portion 5 revolves. As a result, it is possible to further prevent an increase in the size of the device in the direction orthogonal to the central axis C2 of the rotated body 4 rotated by the motor 3.

According to the first embodiment, as described above, in the case where the revolving portion 5 revolves and is in the transition intermediate state in a process of transitioning from one of the parking state and the parking release state to the other, and the revolving portion 5 passes the orthogonal positions P1 and P2 at which the first straight line L1 and the second straight line L2 passing through the revolving axis C4 and the central axis C2 are orthogonal to each other when viewed from the direction along the input axis C1, the shift device is configured to alternately switch from the transition intermediate state to one of the parking state and the parking release state. Accordingly, when a reverse input to pivot the driven lever 6 by an external force via the output shaft 61, vibration of the driven lever 6, or the like is received from the shift switching mechanism 102 side while the motor 3 is stopped, torque of the reverse input to press the revolving portion 5 by the driven lever 6 can be applied not in a direction for switching from the parking state and the parking release state to the transition intermediate state but in a direction for maintaining the parking state and the parking release state. As a result, the parking state and the parking release state can be stably maintained with respect to the reverse input from the shift switching mechanism 102 side or the like.

According to the first embodiment, as described above, the guide portion 62 of the driven lever 6 is the cam groove that guides the movement of the revolving portion 5 while being in contact with the revolving portion 5, and the cam groove includes the stop end portion 62a that is formed as the one end of the cam groove on the output shaft 61 side and stops the driven lever 6 by abutting against the revolving portion 5 in a state of switching to each of the parking state and the parking release state. Here, in the related art, there is known a configuration in which a configuration protruding from a surface of a rotated body toward a driven lever is provided, and such a protruding portion is abutted against an outer edge of the driven lever to stop the driven lever. In such a configuration in the related art, it is required to form a rotating body relatively large with respect to the driven lever 6 in order to avoid abutment of the protruding portion against the outer edge of the driven lever 6 during switching between the parking state and the parking release state, and thus the size of the device increases. Therefore, with the above configuration, the rotated body 4 can be stopped by abutting the revolving portion 5 disposed in the cam groove of the driven lever 6 against the stop end portion 62a of the cam groove. That is, the rotated body 4 can be stopped only by a cam mechanism constituted by the revolving portion 5 and the cam groove including the stop end portion 62a. Therefore, it is not required to provide the portion protruding toward the driven lever 6 from the surface of the rotated body 4 in order to stop the rotated body 4 as in the related art. Therefore, it is not required to consider avoidance of the abutment of the protruding portion against the driven lever 6 during the rotation of the rotated body 4 as in the related art. As a result, an increase in a size of the rotated body 4 can be prevented, and thus an increase in the size of the device can be prevented.

According to the first embodiment, as described above, the input shaft 32 includes the motor gear portion 34 that comes into contact with the rotated body 4 to transmit the driving force, and the non-motor gear portion 35 disposed between the motor gear portion 34 and the motor body 30a that rotatably supports the input shaft 32 in the direction along the input axis C1, and the driven lever 6 includes the through hole 60 through which the input shaft 32 is inserted and inside which the non-motor gear portion 35 is disposed, and is disposed between the motor body 30a and the rotated body 4 in a state in which the input shaft 32 is inserted through the through hole 60. Accordingly, in the axial direction of the input shaft 32, the driven lever 6 is disposed in a range of the non-motor gear portion 35, which is a portion that cannot be used as a gear configuration, and thus the range of the non-motor gear portion 35 can be effectively used. As a result, an increase in the size of the device in the axial direction of the input shaft 32 can be prevented.

According to the first embodiment, as described above, the housing 10a accommodating the motor 3, the rotated body 4, the revolving portion 5, and the driven lever 6 inside is further provided, and the tip end 32a of the input shaft 32 located on the side opposite from the motor body 30a that rotatably supports the input shaft 32 is rotatably supported by the housing 10a. Accordingly, the tip end 32a of the input shaft 32 can also be rotatably supported by the housing 10a as compared to a case where the input shaft is rotatably supported only by the motor body (rotor), and thus the input shaft 32 can be stably rotated.

According to the first embodiment, as described above, the range RG1 where the output shaft 61 is provided and the range RG2 where the rotated body 4 is provided overlap each other in the direction along the input axis C1. Accordingly, the size of the device in the direction along the input axis C1 can be reduced as compared to when the range where the output shaft is provided and the range where the rotated body is provided do not overlap each other in the direction along the input axis.

According to the first embodiment, as described above, the revolving portion 5 is configured to reciprocate from the one end to reach the other end 62b side of the cam groove and return to the one end again while switching from one of the parking state and the parking release state to the other, and the cam groove is formed linearly along the first straight line L1 when viewed from the direction along the input axis C1. Accordingly, the shape of the cam groove that is the guide portion 62 is simplified, and thus the configuration of the device can be simplified.

According to the first embodiment, as described above, the revolving portion 5 in the transition intermediate state is configured to revolve at the position farther from the output shaft 61 than the position of the revolving portion 5 in the parking state and the position of the revolving portion 5 in the parking release state. Accordingly, a relatively large distance can be ensured between the revolving portion 5 and the output shaft 61 during revolving, and thus torque output from the output shaft 61 can be relatively large.

According to the first embodiment, as described above, the input shaft 32 includes the motor gear portion 34 that comes in contact with the rotated body 4 to transmit the driving force, and the rotated body 4 is the circular gear member having the external teeth that mesh with the motor gear portion 34. Accordingly, torque from the motor gear portion 34 of the input shaft 32 can be easily transmitted toward the output shaft 61 by the circular gear member having the external teeth.

According to the first embodiment, as described above, the revolving portion 5 provided at the rotated body 4 that is the gear member is configured to revolve at a position on an inner peripheral side with respect to the external teeth of the gear member. Accordingly, the distances of the external teeth and the revolving portion 5 from the central axis C2 of the rotated body 4 can be different from each other, and thus torque from the input shaft 32 can be decelerated in the revolving portion 5 and the rotated body 4.

According to the first embodiment, as described above, the revolving portion 5 is configured to revolve around the central axis C2 while rotating when being guided by the guide portion 62. Accordingly, the friction between the revolving portion 5 and the guide portion 62 can be reduced by the rotation, and thus the revolving portion 5 can smoothly revolve along the guide portion 62.

### (Second Embodiment)

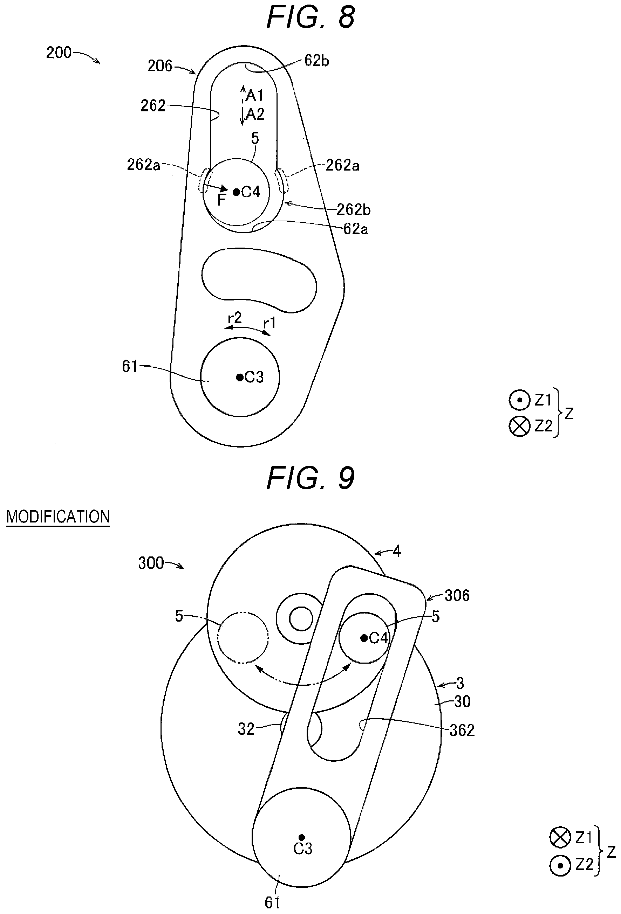

A second embodiment will be described with reference to FIG. 8. In the second embodiment, an example will be described in which the driven lever 6 has an elliptic shape different from that in the first embodiment. In the drawing, the same components as those in the first embodiment are denoted by the same reference signs.

A shift device 200 in the second embodiment shown in FIG. 8 includes a driven lever 206 including a guide portion 262 (cam groove). In FIG. 8, the rotated body 4 (see FIG. 1) and the motor 3 (see FIG. 1) are not shown.

The guide portion 262 has a pressing surface 262a disposed on the stop end portion 62a side (A2 direction side) that is one end of the guide portion 262. The stop end portion 62a of the guide portion 262 is provided with an arc-shaped portion 262b larger than 180 degrees. The pressing surface 262a is a part of the other end 62b side (A1 direction side) of the arc-shaped portion 262b.

The pressing surface 262a is provided as a pair on the r1 direction side and the r2 direction side of the revolving portion 5. A width between the pair of pressing surfaces 262a increases as the pair of pressing surfaces 262a approach the stop end portion 62a.

The pressing surface 262a is configured to press the revolving portion 5 not toward the other end 62b but toward the stop end portion 62a when the revolving portion 5 located at the stop end portion 62a receives torque due to a reverse input from the driven lever 6 in the parking state. As an example, when there is a reverse input in the r1 direction to the driven lever 206, the revolving portion 5 receives a pressing force F from the pressing surface 262a toward the stop end portion 62a side rather than the other end 62b side. The same applies to the case where a reverse input in the r2 direction is applied to the driven lever 6. The same applies to the parking release state. Therefore, the parking state and the parking release state are more reliably maintained by the pressing surface 262a. Other configurations of the second embodiment are the same as those in the first embodiment.

### (Effects of Second Embodiment)

In the second embodiment, the following effects can be obtained.

According to the second embodiment, as described above, the input shaft 32 of the motor 3 is disposed between the rotated body 4 rotated by the input shaft 32 and the output shaft 61 that outputs the driving force of the motor 3 to the shift switching mechanism 102 for switching between the parking state and the parking release state when viewed from the direction along the input axis C1. Accordingly, similarly to the first embodiment, it is possible to prevent an increase in the size of the device in the direction orthogonal to the central axis C2 of the rotated body 4 rotated by the motor 3.

According to the second embodiment, as described above, the guide portion 262 of the driven lever 6 is the cam groove that guides the movement of the revolving portion 5 while being in contact with the revolving portion 5, the revolving portion 5 is configured to reciprocate from one end of the cam groove to reach the other end 62b side and return to the one end again while switching from one of the parking state and the parking release state to the other, and the cam groove has the pressing surface 262a that presses the revolving portion 5 toward the one end side when the revolving portion 5 located at the one end receives the torque from the driven lever 6. Accordingly, when there is a reverse input that pivots the driven lever 6 from the output shaft 61 side while the motor 3 is stopped, the revolving portion 5 can be pressed against the pressing surface 262a by torque of the reverse input to press the revolving portion 5 toward the one end side. Therefore, due to the pressing surface 262a, the torque of the reverse input can be applied in a direction in which the parking state and the parking release state are maintained. As a result, the parking state and the parking release state can be more stably maintained with respect to the reverse input from the shift switching mechanism 102 side or the like.

### [Modifications]

The embodiments disclosed here should be considered to be illustrative and not restrictive in all respects. The scope of the embodiment disclosed here is indicated not by the description of the embodiments but by the claims, and includes all changes (modifications) within the meaning and scope equivalent to the claims.

For example, in the first and second embodiments, an example is shown in which the revolving portion revolves in the outer movement, but the embodiment disclosed here is not limited thereto. In the embodiment disclosed here, as in a shift device 300 of a first modification shown in FIG. 9, the revolving portion 5 may revolve in so-called inner movement. In this case, a guide portion 362 is disposed at a position closer to the output shaft 61 than the guide portion 62 in the first embodiment. When the motor in the first embodiment and a motor in the first modification have the same output, torque output from the output shaft is smaller in the inner movement than in the outer movement as in the first embodiment.

An example is shown in which the driven lever is disposed between the rotor and the rotated body in the Z direction in each of the first and second embodiments described above, but the embodiment disclosed here is not limited thereto. In the embodiment disclosed here, as in the shift device 300 of the first modification shown in FIG. 9, the rotated body 4 may be disposed between the rotor 30 and a driven lever 306. In this case, it is not required to provide the through hole 60 (see FIG. 1) in the driven lever 306 as in the first embodiment.

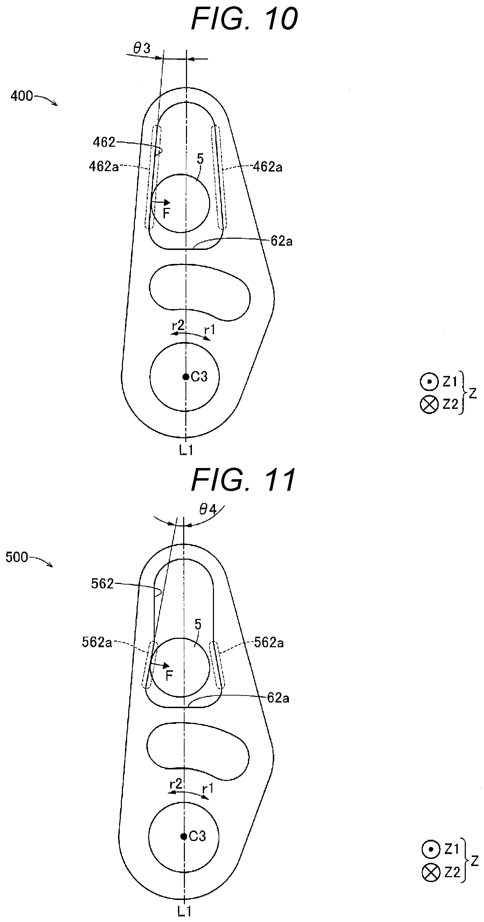

An example is shown in which the pressing surface is formed by an arc-shaped part in the second embodiment described above, but the embodiment disclosed here is not limited thereto. In the embodiment disclosed here, as in a guide portion 462 of a shift device 400 of a second modification shown in FIG. 10, a pair of pressing surfaces 462a may be formed by inclining entire surfaces of the revolving portion 5 on the r1 direction side and the r2 direction side by a predetermined angle θ3 with respect to a center line of the guide portion 462 in the r direction. A width between the pair of pressing surfaces 462a increases as the pair of pressing surfaces 462a approach the stop end portion 62a that is the one end.

As in a guide portion 562 of a shift device 500 of a third modification shown in FIG. 11, a pair of pressing surfaces 562a may be formed by inclining only a portion on the stop end portion 62a side, which is one end on each of the r1 direction side and the r2 direction side of the revolving portion 5, by a predetermined angle θ4 with respect to a center of the guide portion 562 in the r direction. A width between the pair of pressing surfaces 562a increases as the pair of pressing surfaces 562a approach the stop end portion 62a.

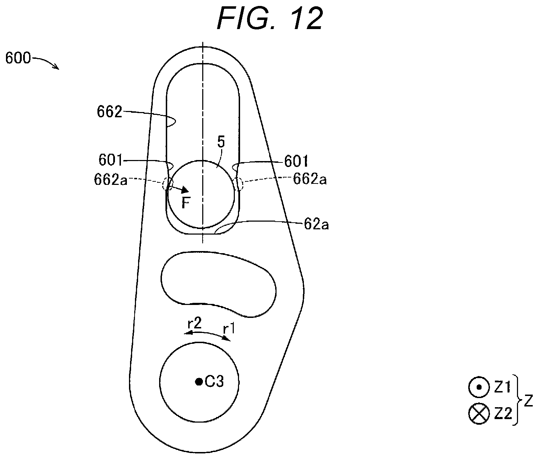

As in a guide portion 662 of a shift device 600 according to a fourth modification shown in FIG. 12, a pair of protrusions 601 protruding inward (toward the revolving portion 5) with respect to the guide portion 662 may be provided on each of surfaces of the revolving portion 5 on the r1 direction side and the r2 direction side, and a portion on the stop end portion 62a side, which is the one end of the pair of protrusions 601, may be used as a pair of pressing surfaces 662a. A width between the pair of pressing surfaces 662a increases as the pair of pressing surfaces 662a approach the stop end portion 62a.

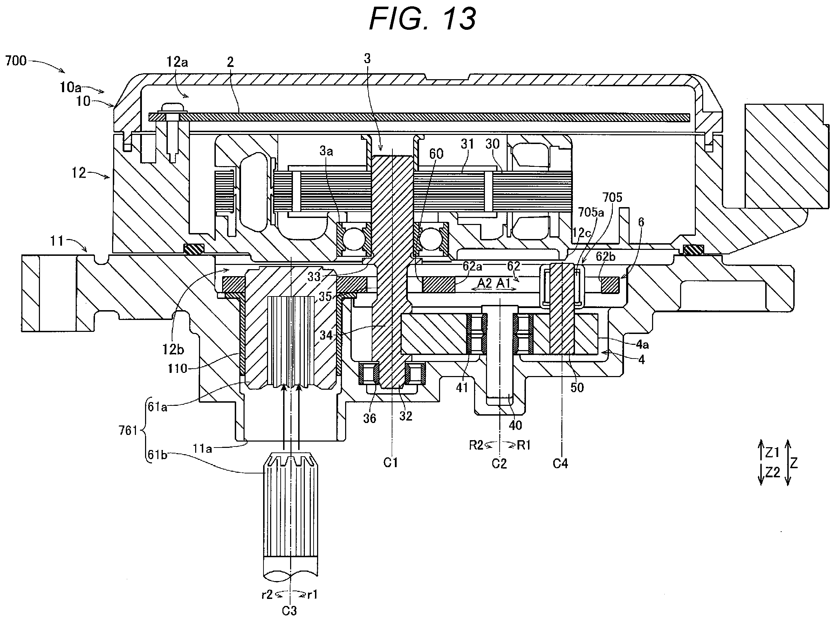

An example is shown in which the revolving portion is the bearing including the plurality of spherical rollers in each of the first and second embodiments described above, but the embodiment disclosed here is not limited thereto. In the embodiment disclosed here, as in a shift device 700 of a fifth modification shown in FIG. 13, a revolving portion 705 may be a needle bearing including a plurality of cylindrical (needle-shaped) rollers 705a.

An example is shown in which the output shaft 61 is formed by a single member in each of the first and second embodiments described above, but the embodiment disclosed here is not limited thereto. In the embodiment disclosed here, as in the shift device 700 according to the fifth modification shown in FIG. 13, an output shaft 761 may include a plurality of members, that is, a first member 61a (hollow shaft) having a groove for spline fitting and a second member 61b fixed to the first member 61a by spline fitting.

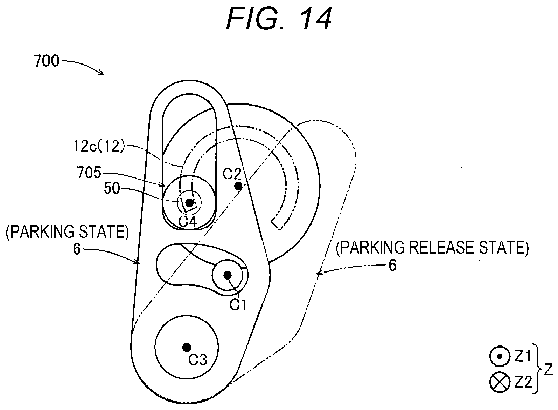

Unlike the first and second embodiments described above, as in the shift device 700 of the fifth modification shown in FIGS. 13 and 14, the support housing 12 may have a protrusion 12c that is abutted against an end surface of the revolving central shaft 50 to restrict movement of the revolving central shaft 50 in the Z1 direction. The protrusion 12c protrudes in the Z2 direction toward the end surface of the revolving central shaft 50. The protrusion 12c extends in an arc shape in a direction orthogonal to the Z direction along a movement trajectory of the revolving central shaft 50 (revolving portion 705). Therefore, the protrusion 12c is always located directly above the Z1 direction side of the revolving central shaft 50.

An example is shown in which the state is switched from the parking state to the parking release state when the revolving portion revolves in the R1 direction in each of the first and second embodiments described above, but the embodiment disclosed here is not limited thereto. In the embodiment disclosed here, the state may be switched from the parking state to the parking release state when the revolving portion revolves in the R2 direction. That is, the position of the revolving portion in each of the parking state and the parking release state may be opposite to the position of the revolving portion in the first and second embodiments.

An example is shown in which the shift device includes a shift switching member in each of the first and second embodiments described above, but the embodiment disclosed here is not limited thereto. In the embodiment disclosed here, the shift device may not include the shift switching member.

An example is shown in which the entire input shaft 32 disposed between the rotated body 4 and the output shaft 61 is disposed between the two tangents 7a and 7b when viewed from the direction along the input axis C1 in each of the first and second embodiments described above with reference to FIG. 5, but the embodiment disclosed here is not limited thereto. In the embodiment disclosed here, when viewed from the direction along the input axis, only a part of the input shaft disposed between the rotated body and the output shaft may be disposed between the two tangents 7a and 7b (see FIG. 5). That is, the input shaft may be disposed at a position intersecting one of the two tangents 7a and 7b (see FIG. 5) when viewed from the direction along the input axis.

### Reference Signs List

3: motor
4: rotated body
5, 705: revolving portion
6, 206, 306: driven lever
10a: housing
30a: motor body
32: input shaft
32a: tip end (of input shaft)
34: motor gear portion
35: non-motor gear portion
40: central shaft
60: through hole (of driven lever)
61, 761: output shaft
62, 262, 362, 462, 562, 662: guide portion
62a: stop end portion
62b: other end
100, 200, 300, 400, 500, 600, 700: shift device
102: shift switching mechanism
262a, 462a, 562a, 662a: pressing surface
C1: input axis
C2: central axis
C3: output axis
C4: revolving axis
L1: first straight line
L2: second straight line
P1, P2: orthogonal position
RG1: range where output shaft is provided
RG2: range where rotated body 4 is provided

## Claims

1. A shift device comprising:
a motor including an input shaft that is rotated around an input axis;
a rotated body including a central shaft that has a central axis parallel to the input axis and configured to be rotated around the central axis by the input shaft;
a revolving portion provided at the rotated body and configured to revolve around the central axis along with rotation of the rotated body; and
a driven lever including an output shaft, which has an output axis parallel to the input axis and outputs a driving force of the motor to a shift switching mechanism that switches between a parking state and a parking release state, and a guide portion that guides the revolving portion, the driven lever being configured to pivot around the output axis by being pressed by the revolving portion while being guided by the guide portion, wherein
the input shaft is disposed between the rotated body and the output shaft when viewed from a direction along the input axis.

2. The shift device according to claim 1, wherein
the revolving portion is formed in a circular shape centered on a revolving axis parallel to the input axis when viewed from the direction along the input axis, and
a first straight line passing through the revolving axis and the output axis intersects the input shaft while the revolving portion revolves when viewed from the direction along the input axis.

3. The shift device according to claim 2, wherein
in a case where the revolving portion revolves and is in a transition intermediate state in a process of transitioning from one of the parking state and the parking release state to another and the revolving portion passes an orthogonal position at which the first straight line and a second straight line passing through the revolving axis and the central axis are orthogonal to each other when viewed from the direction along the input axis, the shift device is configured to alternately switch from the transition intermediate state to one of the parking state and the parking release state.

4. The shift device according to claim 3, wherein
the guide portion of the driven lever is a cam groove that guides movement of the revolving portion while being in contact with the revolving portion,
the revolving portion is configured to reciprocate from one end to reach another end side of the cam groove and return to the one end again while switching from one of the parking state and the parking release state to the other, and
the cam groove has a pressing surface that presses the revolving portion toward the one end when the revolving portion located at the one end receives torque from the driven lever.

5. The shift device according to claim 1, wherein
the guide portion of the driven lever is a cam groove that guides movement of the revolving portion while being in contact with the revolving portion, and
the cam groove includes a stop end portion that is formed as one end of the cam groove on a side of the output shaft and stops the driven lever by abutting against the revolving portion in a state of switching to each of the parking state and the parking release state.

6. The shift device according to claim 1, wherein
the input shaft includes a motor gear portion that comes into contact with the rotated body to transmit a driving force, and a non-motor gear portion disposed between the motor gear portion and a motor body that rotatably supports the input shaft in the direction along the input axis, and
the driven lever includes a through hole through which the input shaft is inserted and inside which the non-motor gear portion is disposed, and is disposed between the motor body and the rotated body in a state in which the input shaft is inserted through the through hole.

7. The shift device according to claim 1, further comprising:
a housing accommodating the motor, the rotated body, the revolving portion, and the driven lever inside, wherein
a tip end of the input shaft located on a side opposite from a motor body that rotatably supports the input shaft is rotatably supported by the housing.

8. The shift device according to claim 1, wherein
in the direction along the input axis, a range where the output shaft is provided and a range where the rotated body is provided overlap each other.
